# EUROPÄISCHE PATENTSCHRIFT

(11) **EP 4 375 136 B1**
(45) Veröffentlichungstag und Bekanntmachung des Hinweises auf die Patenterteilung: **07.10.2026**
(21) Anmeldenummer: 24169227.6
(22) Anmeldetag: 23.08.2018
(51) Int. Cl.: B60N 2/28

(54) **KINDERSITZ ZUR ANBRINGUNG AUF EINEM KRAFTFAHRZEUGSITZ**
CHILD SEAT FOR ATTACHMENT TO A MOTOR VEHICLE SEAT
SIÈGE ENFANT À INSTALLER SUR UN SIÈGE DE VÉHICULE AUTOMOBILE

(30) Priorität: 25.08.2017 DE 202017105118 U
(43) Veröffentlichungstag der Anmeldung: 29.05.2024
(62) Dokumentnummer(n) der früheren Anmeldung(en) nach Art. 76 EPÜ: 18762473.9 / 3 672 831
(73) Patentinhaber: CYBEX GmbH, 95448 Bayreuth (DE)
(72) Erfinder: Powell, Iain, 95448 Bayreuth (DE)
(74) Vertreter: Meissner Bolte Partnerschaft mbB

(56) Entgegenhaltungen:
- EP-A1- 2 241 476
- DE-A1- 10 351 918
- DE-A1- 102012 104 785
- DE-A1- 19 545 263
- GB-A- 2 323 571
- KR-B1- 101 230 706

## Beschreibung

Die Erfindung betrifft einen Kindersitz zur Anbringung auf einem Kraftfahrzeugsitz nach Anspruch 1.

Im Stand der Technik sind Kindersitze zur Anbringung auf einem Kraftfahrzeugsitz allgemein bekannt. Derartige Kindersitze können einen Fangkörper aufweisen und/oder ein eigenes Gurtsystem. Weiterhin können derartige Kindersitze auch zur Befestigung mit dem Gurtsystem des Autos ausgebildet sein. Üblicherweise umfassen Kindersitze mindestens eine Sitzschale bzw. einen Sitzbereich sowie eine Rückenlehne. Weiterhin kann ein derartiger Kindersitz eine Kopfstütze oder einen Stützfuß oder weitere Komponenten aufweisen. Diese Merkmale kann grundsätzlich auch der erfindungsgemäße Kindersitz aufweisen.

Weiterhin sei angemerkt, dass im Rahmen dieser Erfindung der Begriff "Kindersitz" als Oberbegriff für "klassische" Kindersitze und Babyschalen zu verstehen ist. Insoweit ist (wenn im konkreten Zusammenhang nichts anderes angegeben ist) Kindersitz immer als abkürzende Schreibweise für "Kindersitz oder Babyschale" zu verstehen bzw. im Rahmen dieser Erfindung sind für einen Kindersitz vorgesehene Merkmale grundsätzlich auch auf eine Babyschale anwendbar und umgekehrt (solange nichts Gegenteiliges erwähnt ist). Selbiges gilt für den Begriff "Kind", der ebenfalls als Oberbegriff für Kinder und Babys sowie Kleinkinder zu verstehen ist. Sogenannte "Babyschalen" umfassen oftmals (nur) eine einteilige Schale zur Aufnahme des Babys oder Kindes und können ein eigenes Gurtsystem, ggf. eine Kopfstütze und ggf. weitere Komponenten umfassen. Anstelle einer (strukturell abgegrenzten) Rückenlehne weisen derartige "Babyschalen" einen Rückenabschnitt auf, der sich an einen "Sitzbereich" anschließt, in dem das Gesäß des Kindes aufgenommen werden kann. Kindersitzes für größere Kinder haben demgegenüber eine strukturell von einem Sitzbereich abgegrenzte Rückenlehne, deren Neigung ggf. gegenüber dem Sitzbereich variiert werden kann. Die strukturelle Abgrenzung kann beispielsweise durch einen Knick oder Ähnliches gebildet sein.

Generell ist es bekannt, dass ein Kind in einem Kindersitz durch den Dreipunkt-Gurt des Autos oder durch einen am Kindersitz selbst vorgesehenen Gurt (beispielsweise ein Fünfpunkt-Gurt, ein Brust-Gurt oder dergleichen) gesichert wird. Dabei kann ein Gurt über eine Schulter des im Sitz befindlichen Kindes in Richtung einer gegenüberliegenden Beckenseite geführt sein. Es können aber auch zwei Gurte vorgesehen sein, die jeweils über eine der Schultern geführt sind.

Gemeinsam ist diesen bekannten Systemen, dass sich das im Sitz befindliche Kind - im Falle eines Aufpralls des Autos - aufgrund der Massenträgheit zunächst weiterbewegt und dann durch die Gurte bzw. den Fangkörper abrupt abgebremst wird. Der Kopf des Kindes bewegt sich jedoch noch weiter, wodurch es zu einer Nickbewegung kommen kann, wodurch gefährliche Verletzungen, etwa im Bereich der Nackenwirbel, verursacht werden können. Weiterhin besteht oftmals ein Problem darin, dass das Kind in den Sitzbereich eintaucht ("submarining") und z. B. unter dem Fangkörper durchrutscht.

Weiterhin sind im Stand der Technik grundsätzlich Airbag-Lösungen in Kindersitzen bekannt. Diese sollen das Kind beispielsweise bei einem Frontaufprall entsprechend schützen. Die bekannten Lösungen werden jedoch noch als verbesserungswürdig angesehen.

Beispielsweise beschreibt die GB 2 323 571 A einen Kindersitz mit einem aufblasbaren Rückhalteelement, welches durch einen Crashsensor ausgelöst wird.

In der KR 101 230 706 B1 wird ein Kindersitz mit einer mehrstufigen Aufprallabsorptionsfunktion und einem Airbag wird beschrieben, um ein Kind bei mehreren äußeren Stößen mit einer aus Gummimaterial hergestellten Luftfederbaugruppe weicher abzufedern und dadurch die Möglichkeit von Verletzungen während der Benutzung oder bei einem Unfall zu verringern.

In der DE 10 2012 104785 A1 ist ein Sitz beschrieben, bei dem zum besseren Schutz des Kindes das Oberteil gegenüber dem Unterteil unter Bildung eines V-förmigen Querspalts aufstellbar angeordnet ist. In dem V-förmigen Querspalt ist hierfür mindestens ein keilförmiges Spreizmittel vorgesehen, dass in dem Querspalt oder der Prallkörper gegenüber dem keilförmige Spreizmittel relativ verschiebbar derart angeordnet ist, dass die Relativbewegung ein Aufstellen des Oberteils durch das keilförmige Spreizmittel direkt oder indirekt bewirkt.

In der DE 103 51 918 A1 wird ein Kindersitz in einem Fahrzeug mit zumindest einem Fangelement vorgeschlagen, welches etwa oberhalb der Oberschenkel eines in dem Kindersitz sitzenden Kindes angeordnet ist, wobei das Fangelement bewegbar mit dem Kindersitz verbunden ist, sodass im Fall einer Verzögerung des Fahrzeuges eine auf das Kind gerichtete Bewegung des Fangelements ausführbar ist, und wobei das Fangelement mit einer Halteeinrichtung gekoppelt ist, welche die auf das Kind gerichtete Bewegung des Fangelements im Fall einer Verzögerung des Fahrzeuges durch eine Vorverlagerung des Kindersitzes und/oder durch eine Vorverlagerung des Kindes einleitet.

Die EP 2 241 476 A1 beschreibt einen Kindersitz um direkten oder mittelbaren Befestigen an einem Fahrzeugsitz und eine eine Straffermechanik umfassende Gurtstraffervorrichtung, die beim Überschreiten einer definierten, auf den Fahrzeugkindersitz wirkenden Kraft, insbesondere Crashkraft, das Gurtsystem schlagartig strafft.

An dieser Stelle sei angemerkt, dass die oben, im Hinblick auf den Stand der Technik beschriebenen, Merkmale auch allesamt Merkmale des erfindungsgemäßen Kindersitzes (jeweils für sich oder in Kombination) sein können.

Es ist Aufgabe der Erfindung, einen Kindersitz zur Anbringung auf einem Kraftfahrzeug vorzuschlagen, bei dem auf sichere und einfache Art und Weise bei starken Beschleunigungen (bzw. Verzögerungen; wobei Beschleunigung gemäß dem physikalische Sprachgebrauch sowohl für eine Erhöhung als auch eine Erniedrigung der Geschwindigkeit steht), insbesondere im Falle eines Aufpralls, das Kind so gehalten wird, dass die Gefahr von schweren Verletzungen reduziert wird.

Die oben genannte Aufgabe wird weiterhin gelöst durch einen Kindersitz zur Anbringung auf einem Kraftfahrzeug, insbesondere der obigen Art, umfassend
- einen Sitzbereich,
- einen Rückenabschnitt,
   einen Fangkörper sowie eine Fangkörper-Zustellvorrichtung zum Zustellen des Fangkörpers und/oder ein Gurtsystem sowie einen Gurtsystem-Gurtspanner, wobei das Gurtsystem durch den Gurtsystem-Gurtspanner (bzw. -Gurtstraffers) spannbar ist, und/oder eine Kindersitzverankerung mit einer Kindersitzverankerung-Zustellvorrichtung und eine Beschleunigungserfassungseinrichtung zum Erfassen einer Beschleunigung des Kindersitzes sowie eine Steuereinrichtung, die derart konfiguriert ist, dass ein Zustellen mittels der Fangkörper-Zustellvorrichtung und/oder ein Spannen mittels des Gurtsystem-Gurtspanners (bzw. -Gurtstraffers) und oder ein Zustellen der Kindersitzverankerung gegenüber den restlichen Komponenten des Kindersitzes, aufgrund einer vorbestimmen Beschleunigung, insbesondere aufgrund einer durch eine in den Kindersitz integrierten Beschleunigungserfassungseinrichtung erfassten Beschleunigung, bewirkt wird.

In einer bevorzugten Ausführungsform umfasst der Fangkörper einen integrierten Airbag und/oder einen Airbag im Sitzbereich (ggf. auch ohne Fangkörper), eine Beschleunigungserfassungseinrichtung zum Erfassen einer Beschleunigung des Kindersitzes sowie eine Steuereinrichtung, die derart konfiguriert ist, dass ein Auslösen des Airbags aufgrund einer von der Beschleunigungserfassungseinrichtung erfassten Beschleunigung bewirkt wird.

Ein erster aspekt liegt darin, dass der Kindersitz eine in diesen integrierte Beschleunigungserfassungseinrichtung aufweist, so dass der Kindersitz autark (ohne auf entsprechende Informationen, beispielsweise von einer Fahrzeug-Board-Elektronik) den Airbag auslösen kann. Dadurch wird die Sicherheit verbessert.

Unter einer Beschleunigungserfassungseinrichtung ist insbesondere eine Einrichtung zu verstehen, die bei Überschreiten eines vorbestimmten Beschleunigungsgrenzwertes so reagiert (bzw. einen derartigen Output veranlasst), dass die Steuereinrichtung ein Auslösen des Airbags veranlassen kann. Die Reaktion bzw. der Output kann (muss aber nicht) ein elektrisches/elektronisches Signal umfassen. Gegebenenfalls kann eine Reaktion bzw. ein Output auch darin bestehen, dass die Beschleunigungserfassungseinrichtung mechanisch auf das Überschreiten eines vorbestimmten Beschleunigungsgrenzwertes reagiert (beispielsweise eine Verrastung dann gelöst wird), so dass diese mechanische Reaktion (in dem Beispiel also das Entrasten und eine ggf. damit einhergehende Bewegung der Beschleunigungserfassungseinrichtung oder eines Teiles davon) dazu führt, dass die Steuereinrichtung wiederum den Airbag auslöst. Insbesondere bei einer derartigen Lösung können Beschleunigungserfassungseinrichtung und Steuereinrichtung ggf. auch in einer Baugruppe (oder sogar einteilig) ausgebildet sein. Vorzugsweise sind Beschleunigungserfassungseinrichtung und Steuereinrichtung jedoch zwei verschiedenen Teilen zugeordnet bzw. zwei verschiedenen Baugruppen (die ggf. miteinander elektrisch/elektronisch über ein Kabel und/oder drahtlos verbunden sind). Vorzugsweise ist ein Abstand zwischen Beschleunigungserfassungseinrichtung und Steuereinrichtung mindestens 10 cm. Die Steuereinrichtung kann beispielsweise zumindest teilweise am oder nahe zum Airbag (oder in diesen integriert) angeordnet sein. Die Beschleunigungserfassungseinrichtung kann weiter entfernt vom Airbag angeordnet sein (beispielsweise in einer Sitzverankerung). In einer konkreten Ausführungsform umfasst die Beschleunigungserfassungseinrichtung einen Beschleunigungssensor, der zumindest das Überschreiten eines vorbestimmten Beschleunigungsgrenzwertes feststellen kann und einen entsprechenden Output weitergeben kann (insbesondere an die Steuereinrichtung).

Eine weiter bevorzugte Ausführungsform ist ein Kindersitz zur Anbringung auf einem Kraftfahrzeug, der obigen Art, umfassend einen Sitzbereich, einen Rückenabschnitt und einen Fangkörper mit einer integrierten Abstandsvergrößerungseinrichtung, insbesondere mit integriertem Airbag, einem ersten (insbesondere oberen bzw. vorderen) und einem zweiten (insbesondere unteren bzw. hinteren) Abschnitt, wobei der erste Abschnitt mit einem Hauptkörper des Kindersitzes verbunden ist und der zweite Abschnitt mit dem ersten Abschnitt verbunden ist und wobei der zweite Abschnitt derart angeordnet ist, dass er im Falle einer Aktivierung der Abstandsvergrößerungseinrichtung, insbesondere des Airbags, in Richtung eines Beckens eines im Kindersitz sitzenden Kindes (allgemein: nach unten und/oder hinten), vom ersten Abschnitt weg, verlagert wird. Der Kindersitz umfasst vorzugsweise eine Beschleunigungserfassungseinrichtung (insbesondere der obigen Art) zur Erfassung einer Beschleunigung des Kindersitzes sowie eine Steuerrichtung (insbesondere der obigen Art), die derart konfiguriert ist, dass ein Auslösen der Abstandsvergrößerungseinrichtung, insbesondere des Airbags, aufgrund einer von der Beschleunigungserfassungseinrichtung erfassten Beschleunigung erfasst wird. Der erste und/oder der zweite Abschnitt können insbesondere formstabil ausgebildet sein. Bei nicht-ausgelöstem Airbag können erster und/oder zweiter Abschnitt jeweils mindestens 10 %, vorzugsweise mindestens 20 % des Gesamtvolumens des Fangkörpers ausbilden. Ein Volumen des ersten und/oder zweiten Abschnittes kann mindestens 200 cm³, vorzugsweise 500 cm³ betragen. Erster und/oder zweiter Abschnitt können eine Polsterung umfassen. Weiterhin können erster und/oder zweiter Abschnitt gegeneinander schwenkbar sein (wobei eine Verschwenkung bzw. Aufspreizung insbesondere durch Auslösen der Abstandsvergrößerungseinrichtung, insbesondere des Airbags, bewirkt wird). Ein Volumen der Abstandsvergrößerungseinrichtung, insbesondere des Airbags, im aktivierten Fall, kann ggf. geringer sein als ein Volumen des ersten und zweiten Abschnittes (zusammen) im nicht-ausgelösten Fall. Es geht hier also insbesondere nicht um einen extrem voluminösen Airbag, der per se das Kind auffangen soll, sondern vielmehr um eine Abstandsvergrößerungseinrichtung (insbesondere Airbag), die den Fangkörper entsprechend vergrößert (ggf. aufspreizt), so dass dessen Schutzfunktion verbessert wird. Dies schließt nicht aus, dass der Airbag (was vorzugsweis so vorgesehen ist) auch eine dämpfende Funktion hat.

Gemäß einem zweiten Kernaspekt der Erfindung wird also ein Fangkörper vorgeschlagen, dessen äußere Dimensionierung (Hüllfläche) bei Überschreiten einer vorbestimmten Beschleunigung (z. b. einem Aufprall) vergrößert wird, insbesondere dessen Höhe in einer solchen Situation vergrößert wird.

Vorzugsweise soll sich der Fangkörper (bzw. Abschnitte davon) nach oben und/oder unten verlagern. Eine Verlagerung nach oben schützt den im Falle eines Frontalaufpralls nach vorne beschleunigten Kopf des Kindes besonders vorteilhaft. Eine Verlagerung nach unten drückt insbesondere auf die Beine und ggf. das Becken des Kindes, so dass ein "Durchrutschen" des Kindes unter den Fangkörper verhindert (bzw. ein Risiko dafür vermieden bzw. ein Risiko dafür reduziert) werden kann.

In einer konkreten Ausführungsform ist der Fangkörper in einer Seitenansicht etwa U-förmig, wobei sich die U-Form vorzugsweise nach vorne (von der Rückenlehne weg) öffnet und/oder wobei innerhalb der U-Schenkel der Airbag angeordnet ist (dies gilt insbesondere für den ausgelösten bzw. aktivierten Fall, ggf. auch für den nicht-ausgelösten bzw. nicht-aktivierten Fall). Alternativ oder zusätzlich kann in einer U-Form eine Gurtführung vorgesehen sein, so dass ein sitzeigener Gurt oder ein Gurt des Kraftfahrzeugs dort aufgenommen und geführt werden kann. Bevorzugt soll der erste (obere) Abschnitt des Fangkörpers am Kindersitz befestigt sein und/oder durch den fahrzeugeigenen Gurt gehalten werden, um eine Verlagerung des zweiten Abschnitts in Richtung der Beine bzw. des Beckens des Kindes sicherzustellen. Konkret kann die Gurtführung an einer vorderen Seite und/oder an einer unteren Seite des ersten (oberen) Abschnitts ausgeführt sein.

Es ist als eigenständiger Erfindungsgedanke anzusehen, dass in einer Gurtführung bzw. im Bereich einer Gurtführung eines Fangkörpers eine Abstandsvergrößerungseinrichtung, insbesondere ein Airbag (vorzugsweise der obigen Art) angeordnet sind.

Unter einem Zustellen ist insbesondere eine Aktion zu verstehen, bei der die jeweilige Komponente (z. B. Fangkörper und/oder Kindersitzverankerung) näher an die übrigen Komponenten des Kindersitzes (bzw. einen Hauptkörper) herangeführt wird. Im Hinblick auf den Fangkörper bedeutet dies insbesondere , dass der Fangkörper beim Zustellen weiter in Richtung des Kindes (im Gebrauch) bzw. in Richtung einer Kindaufnahmefläche (nach unten bzw. hinten) verlagert wird.

Ein dritter Kerngedanke der Erfindung (der insbesondere mit dem ersten und zweiten Kernaspekt bzw. Kerngedanken verbunden werden kann) liegt darin, einen Fangkörper und/oder ein (kindersitzeigenes) Gurtsystem derart zuzustellen bzw. zu spannen (zu straffen), dass bei Überschreiten eines vorbestimmten Beschleunigungswertes die sicherheitsrelevanten Komponenten (also Fangkörper bzw. Gurtsystem) entsprechend das Kind festhalten. Dabei ist eine integrierte Beschleunigungserfassungseinrichtung (insbesondere der oben beschriebenen Art) vorgesehen, die insbesondere unabhängig von äußeren Signalen (z. B. eines Kraftfahrzeug-Beschleunigungssensors) eine entsprechende Aktivierung auslöst.

In einer bevorzugten Ausführungsform umfasst die Beschleunigungserfassungseinrichtung einen Beschleunigungssensor.

Vorzugsweise steuert die Steuereinrichtung bei einer Überschreitung eines Beschleunigungsschwellwertes von mindestens 2 g, weiter vorzugsweise mindestens 4 g, noch weiter vorzugsweise mindestens 6 g entsprechend an bzw. aktiviert (je nach Zusammenhang insbesondere den jeweiligen Airbag, die Abstandsvergrößerungseinrichtung und/oder die Fangkörper-Zustellvorrichtung und/oder den Gurtsystem-Gurtspanner), wobei der Beschleunigungsschwellwert zusätzlich oder alternativ kleiner als 25 g, vorzugsweise kleiner als 20 g, noch weiter vorzugsweise als 15 g ist. Der Buchstabe g steht für die Erdbeschleunigung.

Im Falle seiner Aktivierung kann der (jeweilige) Airbag nach unten und/oder hinten, insbesondere in Richtung des Beckens/der Hüfte und/oder der Beine eines in dem Kindersitz sitzenden Kindes gedrängt werden. Alternativ (oder zusätzlich) kann der jeweilige Airbag jedoch auch nach oben und/oder hinten gedrängt werden (beispielsweise wenn er in einem oberen Abschnitt eines Fangkörpers angeordnet ist oder in einem Sitzbereich). Wenn der Airbag entweder nach unten oder nach unten und hinten (schräg nach hinten) gedrückt wird, kann damit besonders vorteilhaft ein Durchrutschen des Kinders unter den Fangkörper vermieden werden (bzw. ein entsprechendes Risiko reduziert werden).

Die Beschleunigungserfassungseinrichtung bzw. insbesondere deren Beschleunigungssensor kann an einem Abschnitt des Kindersitzes angeordnet sein, der im eingebauten Zustand des Kindersitzes in der Nähe des Fahrzeugs bzw. dessen Karosserie angeordnet ist. Besonders bevorzugt ist eine Anordnung in oder an einer Verankerungseinrichtung, insbesondere zum Verankern des Kindersitzes am Fahrzeug bzw. an der Karosserie (z. B. IsoFix-Fixierung) oder zum Verankern eines Sitzelementes auf einer Kindersitz-Basis.

Wenn die Beschleunigungserfassungseinrichtung, insbesondere deren Beschleunigungssensor, in der Nähe des Fahrzeugs bzw. der Karosserie angeordnet ist, kann besonders frühzeitig eine ungewöhnliche Beschleunigung (bzw. Verzögerung) beispielsweise im Falle eines Frontalaufpralls erkannt werden. Dadurch wird die Sicherheit verbessert.

Wenn der Airbag zumindest teilweise nach hinten wirkt (beispielsweise schräg nach hinten), wird das Kind nicht nur durch Reibung bzw. Einquetschen gehalten (wie beispielsweise in einem Fall, wenn der Airbag nur vom Fangkörper nach unten oder von der Sitzfläche nach oben wirkt), sondern dann wird das Kind aktiv nach hinten gedrückt (im Falle einer Beschleunigung nach vorne).

Der Airbag kann ein entsprechendes (expansionsfähiges) Gas, beispielsweise ein komprimiertes Gas enthalten.

Steuereinrichtung und Beschleunigungserfassungseinrichtung, insbesondere deren Beschleunigungssensor, können per Kabel oder drahtlos miteinander verbunden sein. Eine Verbindung per Kabel ist bevorzugt.

Der Fangkörper kann per Fahrzeug-Gurtsystem an einem/an dem Hauptkörper des Kindersitzes gehalten werden oder per zusätzlicher (insbesondere in den Kindersitz integrierter) Halteeinrichtung, wie z. B. mittels eines/des Fixierungsgurtes, wobei ggf. in einer zusätzlichen Halteeinrichtung ein Kabel zur Übermittlung von Information, vorzugsweise von der Beschleunigungserfassungseinrichtung, insbesondere dem Beschleunigungssensor, zu der Steuereinrichtung, vorgesehen sein kann.

Der Kindersitz kann eine (autarke) Energieversorgung insbesondere für die Beschleunigungserfassungseinrichtung (bzw. deren Beschleunigungssensor) und/oder die Steuereinrichtung aufweisen. Diese autarke Energieversorgung kann beispielsweise eine Batterie (z. B. eine 9-Volt-Batterie) und/oder eine Akkumulator umfassen.

Der Kindersitz kann weiterhin einen Kraftbegrenzer zur Begrenzung einer durch eine Rückhalteeinrichtung, insbesondere Gurtsystem, auf das Kind ausgeübten Kraft, umfassen. Ein Schwellenwert des Kraftbegrenzers liegt vorzugsweise oberhalb eines/des Schwellenwertes eines/der Zustelleinrichtung, insbesondere eines/des Gurtsystem-Gurtspanners. Dadurch wird die Sicherheit verbessert, da vermieden wird, dass der Kraftbegrenzer zu früh mit seiner Wirkung einsetzt (im Vergleich zum Einsetzen der Wirkung der Zustelleinrichtung). Insoweit ein Einsetzen der Wirkung des Kraftbegrenzers und der Zustelleinrichtung von einem Beschleunigungsschwellenwert abhängen, kann der Schwellenwert für den Kraftbegrenzer insbesondere mindestens 0,5 g, vorzugsweise mindestens 1 g, noch weiter vorzugsweise mindestens 2 g oberhalb des Schwellenwertes für die Zustelleinrichtung bzw. den Gurtsystem-Gurtspanner liegen. Alternativ oder zusätzlich kann der Kraftbegrenzer blockiert sein, bis die Zustellvorrichtung bzw. der Gurtsystem-Gurtspanner ausgelöst wurde.

Die oben erwähnte (jeweilige) Zustelleinrichtung bzw. der oben erwähnte (jeweilige) Gurtspanner (Gurtspanneinrichtung) kann mit einer Steuereinrichtung zusammen wirken, die zusätzlich gegenüber der Steuereinrichtung für die Abstandsvergrößerungseinrichtung bzw. den Airbag vorgesehen sein kann oder zumindest teilweise durch diese ausgebildet werden kann. Weiterhin kann die oben erwähnte (jeweilige) Zustelleinrichtung bzw. der oben erwähnte (jeweilige) Gurtspanner (Gurtspanneinrichtung) mit einer Beschleunigungserfassungseinrichtung, insbesondere einem Beschleunigungssensor zusammen wirken, die/der zusätzlich gegenüber der Steuereinrichtung für die Abstandsvergrößerungseinrichtung bzw. den Airbag vorgesehen sein kann oder zumindest teilweise durch diese ausgebildet werden kann.

Die Gurtspanneinrichtung kann so konfiguriert sein, dass diese einen Zug auf einen oder zwei Beckengurt(e) ausübt.

(Die) Beckengurte können untere Abschnitte von kombinierten Becken-Schulter-Gurten sein oder strukturell (z. B. durch ein ggf. starres Kopplungsteil, das optional eine Zunge aufweisen kann) gegenüber den Schultergurten abgegrenzt sein.

Die Steuereinrichtung und/oder die Beschleunigungsbestimmungseinrichtung bzw. der Beschleunigungssensor kann/können in die Gurtspanneinrichtung integriert sein oder separat vorgesehen sein.

Durch die Gurtspanneinrichtung können insbesondere die Beine und das Becken des Kindes nach unten gehalten werden.

Optional kann kein Zug (unmittelbar) auf die Beckengurte ausgeübt werden, sondern ein Zug auf einen Einstellgurt, ggf. so dass mittelbar (vor allem) Schultergurte (weiter) gestrafft werden. Der Einstellgurt ist vorzugsweise eine Verlängerung der (insbesondere bereits zusammengeführten) Schultergurte und ggf. mit diesen über ein Kopplungsteil (z. B. mit mindestens drei oder genau drei Schlitzen) verbunden.

In Ausführungsformen kann sowohl auf den Einstellgurt als auch auf die Beckengurte ein entsprechender Zug (unmittelbar) ausgeübt werden.

Zum Ausüben des Zuges können ausführungemäß entsprechende Gurte bzw. Gurtabschnitte durch eine (vorzugsweise dreieckförmige) Öse, die mit der Gurtspanneinrichtung verbunden bzw. verbindbar ist, verlaufen.

In einer Ausführungsform kann ein (unmittelbarer) Zug auf den Einstellgurt (und damit mittelbar vor allem auf die Schultergurte) ausgeübt werden, so dass die entsprechenden Gurte gestrafft werden. Alternativ oder zusätzlich kann ein Zug auf eine Sitzverankerung ausgeübt werden, was zur Folge hat, dass der Kindersitz (bei Überschreiten des zuvor bestimmten Beschleunigungsschwellenwertes) nahe an der Rückenlehne eines Kraftfahrzeugsitzes gehalten wird (bzw. näher an die Rückenlehne herangeführt wird).

In Ausführungsformen kann die Spanneinrichtung (nur) an der Sitzverankerung wirken; oder an der Sitzverankerung und dem Einstellgurt und den Beckengurten; oder an der Sitzverankerung und den Beckengurten. Im Falle des Feststellens einer bestimmten Beschleunigung werden die jeweiligen Elemente (relativ zu den übrigen Komponenten des Kindessitzes bzw. einem Hauptköper des Kindersitzes) vorzugsweise in die entsprechende Richtung gezogen oder gedrückt.

Bein der jeweiligen Steuereinrichtung kann es sich um eine elektronische Steuereinrichtung handeln.

Grundsätzlich kann der (jeweilige) Fangkörper formstabil ausgebildet sein (wenn keine äußeren Kräfte, abgesehen von der Schwerkraft, wirken, was insbesondere nicht ausschließt, dass der Fangkörper, durch beispielsweise einen Airbag im Falle eines Aufpralls, verformbar ist). Ein Volumen des Fangkörpers kann mindestens 1000 cm³, vorzugsweise mindestens 2000 cm³ betragen. Eine maximale Ausdehnung des Fangkörpers bezüglich dreier zueinander senkrechter Achsen kann (jeweils) mindestens 5 cm, vorzugsweise mindestens 10 cm betragen. Der Fangkörper kann eine Polsterung umfassen.

Vorzugsweise weist der Kindersitz einen Seitenaufprallschutz auf. Der Seitenaufprallschutz umfasst vorzugsweise mindestens ein (weiter vorzugsweise mindestens zwei, ggf. jeweils mindestens eines an beiden Seiten des Kindersitzes), vorzugsweise gesondert (insbesondere außenseitig; vorzugsweise als separates Element gegenüber einem Sitzkörper, das insbesondere keine das Kind stützende Funktion aufweist) angeordnete(s) und/oder verstellbare(s) und/oder seitlich angeordnete(s), Seitenaufprallschutzelement(e). Mindestens ein Seitenaufprallschutzelement kann in einem Rückenabschnitt angeordnet sein. Alternativ oder zusätzlich kann mindestens ein Seitenaufprallschutzelement auf Höhe einer Kopfstütze angeordnet sein. Alternativ oder zusätzlich kann mindestens ein Seitenaufprallschutzelement in einem Beinabschnitt angeordnet sein. Das (jeweilige) Seitenaufprallschutzelement ist vorzugsweise formstabil bzw. starr. Das (jeweilige) Seitenaufprallschutzelement ist vorzugsweise so konfiguriert, dass es eine Funktionsstellung (mit verbessertem Seitenaufprallschutz) sowie ein Ruhestellung einnehmen kann. In der Funktionsstellung steht das (jeweilige) Seitenaufprallschutzelement vorzugsweise weiter nach außen (seitlich) vor als in der Ruhestellung. Eine globale Breite des Kindersitzes kann in der Funktionsstellung des Seitenaufprallschutzelementes größer sein als in der Ruhestellung. Ein Überführen zwischen Funktions- und Ruhestellung kann translatorisch (durch Verschieben, z. B teleskopisch) und/oder durch Verschenken (Ein- bzw. Ausklappen, insbesondere in eine bzw. aus einer Außenfläche des Kindersitzes) erfolgen.

Die oben genannte Aufgabe wird weiterhin gelöst durch ein Kraftfahrzeug mit einem Kindersitz der obigen Art.

Weiterhin wird die obige Aufgabe gelöst durch ein Verfahren der oben beschriebenen Art, zur Aktivierung eines Fangkörpers und/oder eines Gurtsystems eines Kindersitzes zur Anbringung auf einem Kraftfahrzeugsitz, insbesondere der obigen Art, umfassend einen Sitzbereich und einen Rückenabschnitt, wobei der Fangkörper zugstellt wird und/oder wobei ein Gurtsystem durch einen Gurtsystem-Gurtspanner gespannt wird, und/oder wobei eine Kindersitzverankerung zugstellt wird, wobei eine Beschleunigung des Kindersitzes erfasst wird sowie ein Zustellen des Fangkörpers und/oder ein Spannen mittels des Gurtsystem-Gurtspanners bei einer vorbestimmen Beschleunigung und/oder ein Zustellen der Kindersitzverankerung gegenüber den restlichen Komponenten des Kindersitzes, insbesondere bei einer durch eine in den Kindersitz integrierten Beschleunigungserfassungseinrichtung erfassten Beschleunigung, bewirkt wird.

In einer bevorzugten Ausführungsform des beschriebenen Verfahrens wird die obige Aufgabe gelöst durch das Verfahren zum Auslösen eines Airbags eines Kindersitzes zur Anbringung auf einem Kraftfahrzeugsitz der oben beschriebenen Art, umfassend einen Sitzbereich, einen Rückenabschnitt, einen Fangköper mit integriertem Airbag, wobei eine im Kindersitz integrierte Beschleunigungserfassungseinrichtung eine Beschleunigung des Kindersitzes erfasst und eine Steuereinrichtung ein Auslösen des Airbags aufgrund einer von der Beschleunigungserfassungseinrichtung erfassten Beschleunigung bewirkt.

In einer bevorzugten Ausführungsform des beschriebenen Verfahrens wird die obige Aufgabe gelöst durch ein Verfahren zum Aktivieren eines Fangkörpers eines Kindersitzes zur Anbringung auf einem Kraftfahrzeugsitz der obigen Art, umfassend einen Sitzbereich, einen Rückenabschnitt und einen Fangköper mit einer integrierten Abstandsvergrößerungseinrichtung, insbesondere mit integriertem Airbag, einem ersten (oberen bzw. vorderen) und einem zweiten (unteren bzw. hinteren) Abschnitt, wobei der erste Abschnitt mit einem Hauptkörper des Kindesitzes verbunden ist und der zweite Abschnitt mit dem ersten Abschnitt verbunden ist, wobei Abstandsvergrößerungseinrichtung, insbesondere Airbag, so aktiviert werden, dass der zweite Abschnitt in Richtung eines Beckens eines im Kindersitz sitzenden Kindes, vom ersten Abschnitt weg, verlagert wird, wobei das Verfahren vorzugsweise weiterhin umfasst: Erfassen einer Beschleunigung des Kindersitzes sowie Auslösen der Abstandsvergrößerungseinrichtung, insbesondere des Airbags, aufgrund der erfassten Beschleunigung.

Bevorzugte Verfahrensmerkmale ergeben sich aus der Beschreibung des Kindersitzes, insbesondere aus den dort beschriebenen funktionellen Merkmalen.

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine schematische Seitenansicht (teilweise im Schnitt) eines erfindungsgemäßen Kindersitzes gemäß einer ersten Ausführungsform in einem ersten Zustand;
- Fig. 2: den Kindersitz gemäß Fig. 1 in einem zweiten Zustand;
- Fig. 3: eine schematische Seitenansicht (teilweise im Schnitt) eines erfindungsgemäßen Kindersitzes gemäß einer zweiten Ausführungsform in einem ersten Zustand;
- Fig. 4: den Kindersitz gemäß Fig. 3 in einem zweiten Zustand;
- Fig. 5: eine schematische Seitenansicht (teilweise geschnitten) einer dritten Ausführungsform des Kindersitzes in einem ersten Zustand;
- Fig. 6: den Kindersitz gemäß Fig. 5 in einem zweiten Zustand;
- Fig. 7: eine schematische Seitenansicht (teilweise geschnitten) einer vierten Ausführungsform des erfindungsgemäßen Kindersitzes in einem ersten Zustand;
- Fig. 8: den Kindersitz gemäß Fig. 7 in einem zweiten Zustand;
- Fig. 9: eine schematische Seitenansicht (teilweise geschnitten) einer fünften Ausführungsform des erfindungsgemäßen Kindersitzes in einem ersten (nicht-aktivierten) Zustand
- Fig. 10: eine schematische Darstellung einer Gurtspanneinrichtung gemäß einer ersten Ausführungsform;
- Fig. 11: eine schematische Darstellung einer Gurtspanneinrichtung gemäß einer zweiten Ausführungsform;
- Fig. 12: eine schematische Darstellung einer dritten Ausführungsform einer Gurtspanneinrichtung; und
- Fig. 13: eine vierte Ausführungsform einer erfindungsgemäßen Gurtspanneinrichtung.

In der nachfolgenden Beschreibung werden für gleiche und gleichwirkende Teile dieselben Bezugsziffern verwendet.

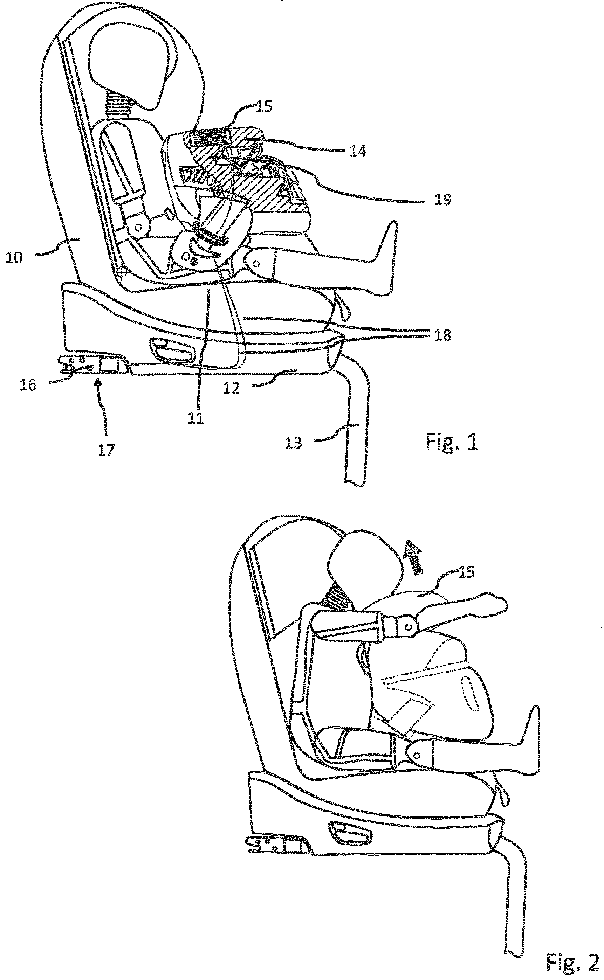

Fig. 1 zeigt einen Kindersitz mit einer Rückenlehne 10 und einem Sitzbereich 11. Weiterhin umfasst der Kindersitz als optionale Elemente eine Basis 12 sowie einen Stützfuß 13.

In einem Fangkörper 14 ist (in einem oberen Abschnitt bzw. an eine obere Oberfläche angrenzend) ein Airbag 15 vorgesehen. Der Airbag 15 ist in Fig. 1 im nicht-aktivierten Zustand. In einer Sitzverankerung 16 ist ein Beschleunigungssensor 17 (nicht im Detail gezeigt) angeordnet. Der Beschleunigungssensor 17 ist über Kabel 18 mit einer Steuereinrichtung 19 (nicht im Detail gezeigt) verbunden, die den Airbag 15 (bei Überschreiten eines vorbestimmten Beschleunigungsschwellenwertes) auslöst.

Der aktivierte Zustand ist in Fig. 2 gezeigt. Wie dort erkennbar, wirkt der Airbag nach oben und nach hinten, so dass (bei einem Frontaufprall), Kopf und Brust des Kindes geschützt werden. In Fig. 2 sind der Einfachheit halber die Kabel 18 nicht erkennbar.

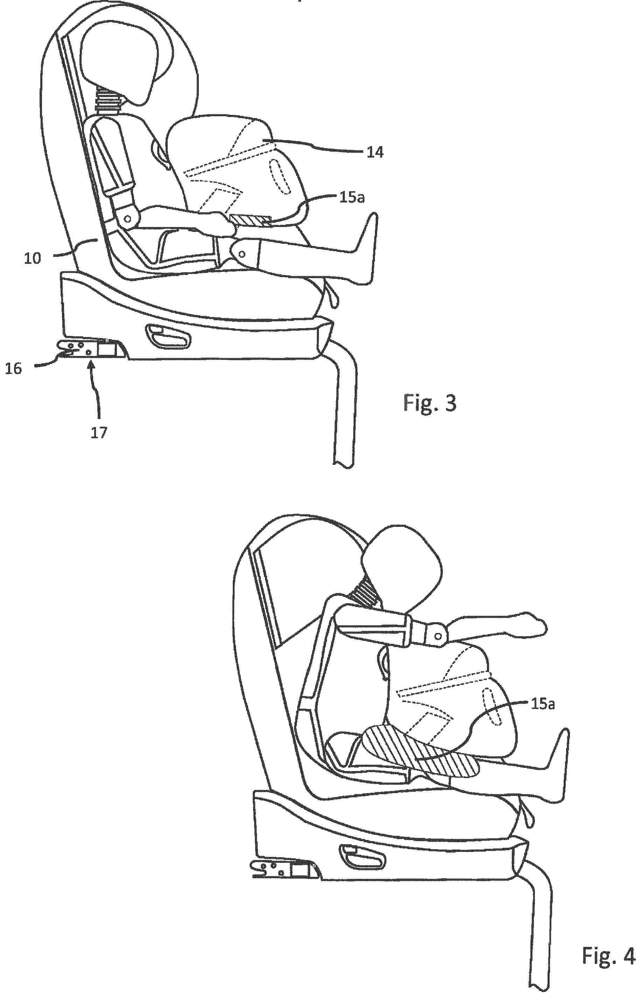

Die Ausführungsform gemäß Fig. 3 und 4 entspricht grundsätzlich der Ausführungsform gemäß Fig. 1 und 2. Hier ist kein oberseitiger Airbag, sondern ein unterseitiger Airbag 15a vorgesehen. Der unterseitige Airbag 15a ist in einem unteren Abschnitt des Fangkörpers 14 vorgesehen und grenzt insbesondere an eine untere Oberfläche des Fangkörpers 14. Im Auslösefall (siehe Fig. 4) dehnt sich der Airbag in Richtung Beine und Becken/Hüfte des Kindes aus. Dadurch wird insbesondere gewährleistet, dass das Kind nicht nur durch Reibung bzw. Einquetschen zwischen Sitzbereich und Fangkörper gehalten wird, sondern auch durch ein Nach-hinten-Drücken des Airbags (in Richtung Becken des Kindes), und "Submarining" (Durchrutschen unter dem Fangkörper) wird effektiv verhindert.

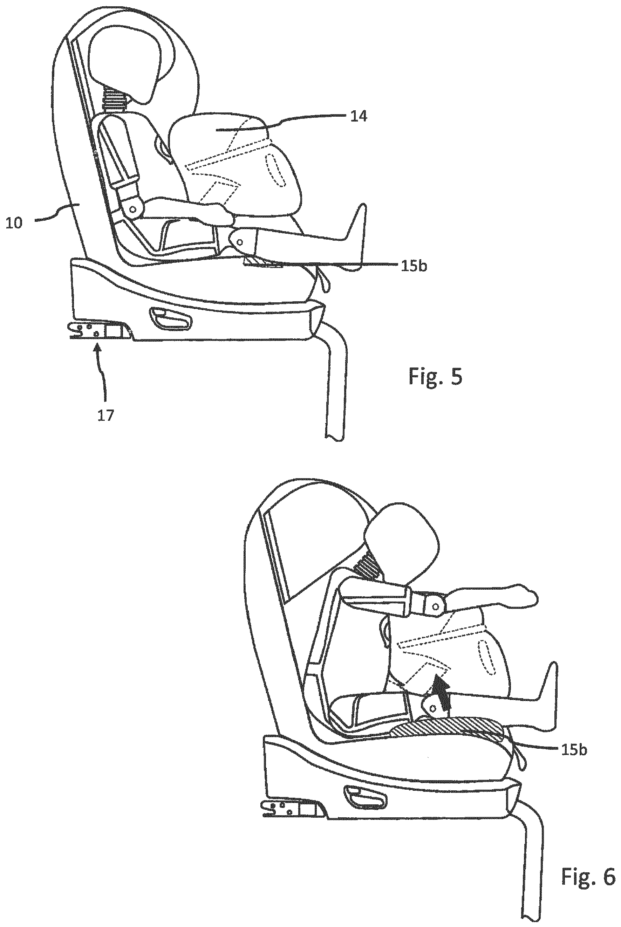

Auch die Ausführungsform gemäß Fig. 5 und 6 entspricht der Ausführungsform gemäß Fig. 1 und 2 (grundsätzlich), mit den folgenden Unterschieden. Hier ist im Fangkörper 14 kein Airbag vorgesehen (ein solcher kann jedoch gemäß den Fig. 1 und/oder 3 vorgesehen sein). Ein Airbag 15b ist jedoch in dem Sitzbereich 11 vorgesehen (und zwar ausschließlich, zumindest im nicht-aktivierten Zustand, innerhalb einer vorderen Hälfte des Sitzbereiches 11). Der Airbag 15b grenzt an eine obere Oberfläche des Sitzbereiches 11 an (in einem vorderen Bereich). Im Auslösefall (siehe Fig. 6) drückt bzw. wirkt der Airbag nach schräg-hinten. Dadurch kann einerseits ein Durchrutschen des Kindes unter den Fangkörper verhindert werden (bzw. ein entsprechendes Risiko reduziert werden). Durch das Wirken nach hinten wird auch hier wieder das Kind durch entsprechenden Gegendruck des Airbags gehalten und zwar nicht nur durch Einquetschen, sondern auch durch einen entsprechend nach hinten wirkenden Gegendruck. Die in Fig. 5 und 6 nicht im Detail gezeigte Steuereinrichtung zum Auslösen des Airbags kann beispielsweise im Sitzbereich 11 an dem Airbag angrenzend angeordnet sein und (analog Fig. 1 bis 4) mit entsprechenden Kabeln mit dem Beschleunigungssensor 17 verbunden werden. Grundsätzlich kann bei allen Ausführungsformen anstelle eines Kabels auch eine drahtlose Verbindung realisiert sein.

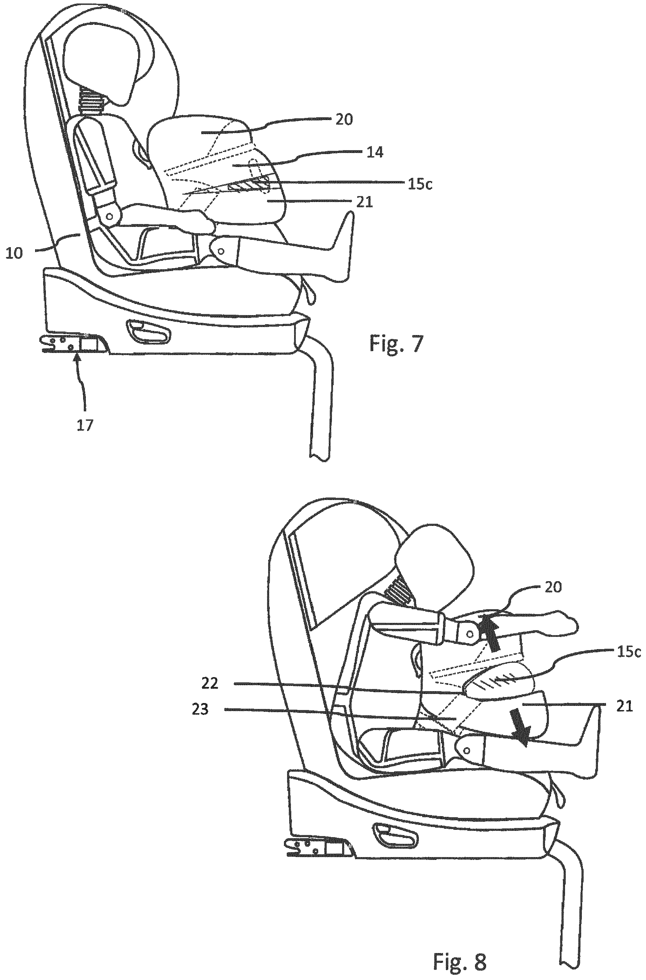

Die Ausführungsform gemäß Fig. 7 und 8 entspricht grundsätzlich der Ausführungsform gemäß Fig. 1 und 2, mit den folgenden Unterschieden. In der Ausführungsform gemäß Fig. 7 und 8 ist kein oberseitiger oder unterseitiger Airbag 15, 15a vorgesehen (diese können jedoch einzeln oder in Kombination vorgesehen sein), sondern ein zwischen einem ersten Abschnitt 20 und einem zweiten Abschnitt 21 angeordneter Airbag 15c. Der erste Abschnitt 20 ist ein oberer Abschnitt, der zweite Abschnitt 21 ist ein unterer Abschnitt. Die beiden Abschnitte 20, 21 sind gegeneinander aufspreizbar. Im Falle der Aktivierung des Airbags (siehe Fig. 8) werden erster Abschnitt 20 und zweiter Abschnitt 21 auseinander gedrängt. Wie weiterhin in Fig. 8 erkennbar ist, bildet der Fangkörper 14 (zumindest im Auslösefall) in Seitenansicht eine U-Form. Innerhalb der Schenkel des U ist der (ausgelöste) Airbag angeordnet. Weiterhin kann innerhalb des U auch eine Gurtführung 22 für einen Haltegurt 23 verlaufen.

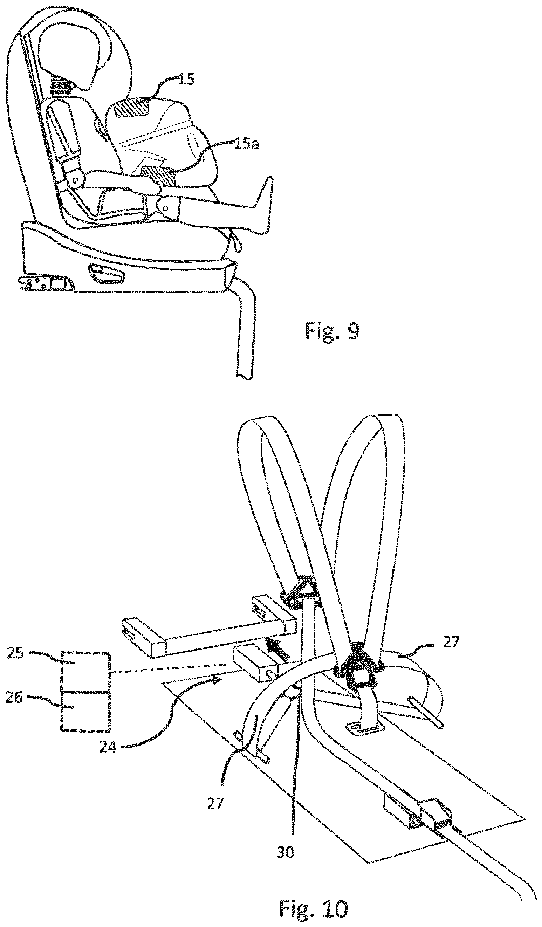

In Fig. 9 ist eine weitere Ausführungsform gezeigt, die einer Kombination der Ausführungsformen gemäß der Fig. 1 und 3 entspricht. Hier ist also sowohl ein oberseitiger Airbag 15 als auch ein unterseitiger Airbag 15a vorgesehen. Hinsichtlich der Wirkungen der Airbags 15, 15a wird auf die Beschreibung zu den Fig. 1 bis 4 verwiesen.

Fig. 10 zeigt eine schematische Schrägansicht einer erfindungsgemäßen Gurtspanneinrichtung. Die Gurtspanneinrichtung 24 wirkt mit einer Steuereinrichtung 25 (die zusätzlich gegenüber der obigen Steuereinrichtung 19 vorgesehen sein kann oder zumindest teilweise durch diese ausgebildet werden kann) und einer Beschleunigungsbestimmungseinrichtung bzw. Beschleunigungssensor 26 (die/der zusätzlich gegenüber der obigen Beschleunigungsbestimmungseinrichtung bzw. dem obigen sein kann oder zumindest teilweise durch diese/diesen ausgebildet werden kann) derart zusammen, dass bei Überschreiten eines bestimmten Beschleunigungsgrenzwertes die Steuerung 25 die Gurtspanneinrichtung 24 so ansteuert, dass diese einen Zug auf Beckengurte 27 ausübt.

Die Steuereinrichtung 25 und/oder die Beschleunigungsbestimmungseinrichtung bzw. der Beschleunigungssensor 26 können in die Gurtspanneinrichtung integriert sein oder separat vorgesehen sein. Die Beckengurte können untere Abschnitte von kombinierten Becken-Schulter-Gurten sein oder strukturell (z. B. durch ein ggf. starres Kopplungsteil, das optional eine Zunge aufweisen kann) gegenüber den Schultergurten abgegrenzt sein.

Gemäß Fig. 10 können (beispielsweise im Falle eines Unfalls) insbesondere die Beine und das Becken des Kindes nach unten gehalten werden.

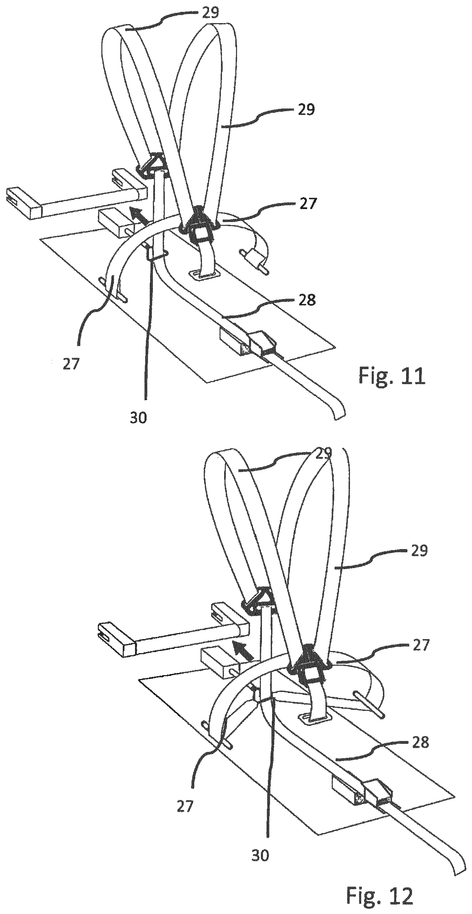

Die Ausführungsform gemäß Fig. 11 entspricht prinzipiell der Ausführungsform gemäß Fig. 10, wobei hier jedoch kein Zug (unmittelbar) auf die Beckengurte 27 ausgeübt wird, sondern ein Zug auf einen Einstellgurt 28, so dass mittelbar (vor allem) Schultergurte 29 (weiter) gestrafft werden. Der Einstellgurt 28 ist vorzugsweise eine Verlängerung der (insbesondere bereits zusammengeführten) Schultergurte 29 und ggf. mit diesen über ein Kopplungsteil (z. B. mit mindestens drei oder genau drei Schlitzen) verbunden.

Die Ausführungsform gemäß Fig. 12 ist eine Kombination der Ausführungsform gemäß den Fig. 10 und 11, insofern als sowohl auf den Einstellgurt 28 als auch auf die Beckengurte 27 ein entsprechender Zug (unmittelbar) ausgeübt wird.

Zum Ausüben des Zuges verlaufen (in den Ausführungsformen gemäß Fig. 10 bis 13) die entsprechenden Gurte bzw. Gurtabschnitte durch eine (hier vorzugsweise dreieckförmige) Öse 29, die mit der Gurtspanneinrichtung 24 verbunden bzw. verbindbar ist.

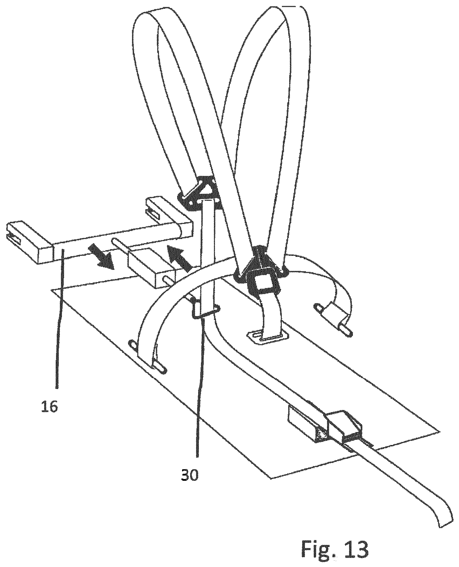

In Fig. 13 ist eine Lösung gezeigt, bei der ebenfalls (anlog Fig. 11) ein (unmittelbarer) Zug auf den Einstellgurt 28 (und damit mittelbar vor allem auf die Schultergurte 29) ausgeübt wird, so dass die entsprechenden Gurte gestrafft werden. Weiterhin wird ein Zug auf eine Sitzverankerung 16 ausgeübt, was zur Folge hat, dass der Kindersitz (bei Überschreiten des zuvor bestimmten Beschleunigungsschwellenwertes) nahe an der Rückenlehne eines Kraftfahrzeugsitzes gehalten wird (bzw. näher an die Rückenlehne herangeführt wird).

Alternativ ist es möglich, dass die Spanneinrichtung nur an der Sitzverankerung 16 wirkt; oder an der Sitzverankerung 16 und dem Einstellgurt und den Beckengurten 27; oder an der Sitzverankerung 16 und den Beckengurten 27. Im Falle des Feststellens einer bestimmten Beschleunigung werden die jeweiligen Elemente (relativ zu den übrigen Komponenten des Kindersitzes bzw. einem Hauptköper des Kindersitzes) in Richtung von Pfeilen gezogen (oder gedrückt), die in den Figuren 10 bis 13 dargestellt sind.

Bein der jeweiligen Steuereinrichtung kann es sich um eine elektronische Steuereinrichtung handeln.

### Bezugszeichenliste

- 10: Rückenlehne
- 11: Sitzbereich
- 12: Basis
- 13: Stützfuß
- 14: Fangkörper
- 15: Airbag
- 15a: Airbag
- 15b: Airbag
- 15c: Airbag
- 16: Sitzverankerung
- 17: Beschleunigungssensor
- 18: Kabel
- 19: Steuereinrichtung
- 20: erster Abschnitt
- 21: zweiter Abschnitt
- 22: Gurtführung
- 23: Haltegurt
- 24: Gurtspanneinrichtung
- 25: Steuereinrichtung
- 26: Beschleunigungssensor
- 27: Beckengurt
- 28: Einstellgurt
- 29: Schultergurt
- 30: Öse

## Patentansprüche

1. Kindersitz zur Anbringung auf einem Kraftfahrzeugsitz umfassend
- einen Sitzbereich (11),
- einen Rückenabschnitt (10),
- einen Fangkörper (14) sowie eine Fangkörper-Zustellvorrichtung zum Zustellen des Fangkörpers und/oder
ein Gurtsystem sowie einen Gurtsystem-Gurtspanner, wobei das Gurtsystem durch den Gurtsystem-Gurtspanner spannbar ist und/oder
eine Kindersitzverankerung mit einer Kindersitzverankerung-Zustellvorrichtung, und
- eine Beschleunigungserfassungseinrichtung zum Erfassen einer Beschleunigung des Kindersitzes sowie eine Steuereinrichtung (19) , die derart konfiguriert ist, dass
ein Zustellen mittels der Fangkörper-Zustellvorrichtung,
und/oder
ein Spannen mittels des Gurtsystem-Gurtspanners
und/oder ein Zustellen der Kindersitzverankerung gegenüber den restlichen Komponenten des Kindersitzes,
aufgrund einer vorbestimmen Beschleunigung, insbesondere aufgrund einer durch eine in den Kindersitz integrierten Beschleunigungserfassungseinrichtung erfassten Beschleunigung, bewirkt wird.

2. Kindersitz nach Anspruch 1, wobei der Fangkörper (14) einen integrierten Airbag (15, 15a, 15c) umfasst und/oder wobei ein Airbag (15b) im Sitzbereich vorgesehen ist, wobei die Steuereinrichtung (19) derart konfiguriert ist, dass ein Auslösen des Airbags (15, 15a-15c) aufgrund einer von der Beschleunigungserfassungseinrichtung erfassten Beschleunigung bewirkt wird.

3. Kindersitz nach Anspruch 1 oder 2, wobei der Fangköper (14) eine integrierten Abstandsvergrößerungseinrichtung umfasst, insbesondere mit integriertem Airbag (15a), einem ersten (20) und einem zweiten (21) Abschnitt, wobei der zweite Abschnitt mit dem ersten Abschnitt verbunden ist und derart angeordnet ist, dass er im Falle einer Aktivierung der Abstandsvergrößerungseinrichtung, insbesondere des Airbags (15c), in Richtung eines Beckens und/oder der Beine eines im Kindersitz sitzenden Kindes, vom ersten Abschnitt weg, verlagert wird, wobei der Fangkörper vorzugsweise ausgebildet ist, im Bereich des ersten Abschnitts am Kindersitz gehalten oder befestigt zu werden,
wobei die Steuereinrichtung (19) derart konfiguriert ist, dass ein Auslösen der Abstandsvergrößerungseinrichtung, insbesondere des Airbags (15c), aufgrund einer von der Beschleunigungserfassungseinrichtung erfassten Beschleunigung bewirkt wird.

4. Kindersitz nach einem der vorhergehenden Ansprüche,
**dadurch gekennzeichnet, dass**
die Beschleunigungserfassungseinrichtung einen Beschleunigungssensor (17) umfasst.

5. Kindersitz nach einem der vorhergehenden Ansprüche,
**dadurch gekennzeichnet, dass**
die Steuereinrichtung (19) bei einer Überschreitung eines Beschleunigungsschwellenwertes von mindestens 2 g, vorzugsweise mindesten 4 g, weiter vorzugsweise mindestens 6 g entsprechend und/oder von maximal 25 g, vorzugsweise 20 g, weiter vorzugsweise 15 g ansteuert bzw. aktiviert.

6. Kindersitz nach einem der vorhergehenden Ansprüche,
**dadurch gekennzeichnet, dass**
der Airbag (15a) im Falle seiner Aktivierung nach unten und/oder hinten, insbesondere in Richtung der Hüfte und/oder der Beine eines in dem Kindersitz sitzenden Kindes gedrängt wird.

7. Kindersitz nach einem der vorhergehenden Ansprüche,
**dadurch gekennzeichnet, dass**
die Beschleunigungserfassungseinrichtung, insbesondere der Beschleunigungssensor (17), an einem Abschnitt des Kindesitzes angeordnet ist, der im eingebauten Zustand des Kindersitzes in der Nähe des Fahrzeugs bzw. der Karosserie angeordnet ist, vorzugsweise in einer Verankerungseinrichtung (16), insbesondere zum Verankern des Kindersitzes am Fahrzeug bzw. Fahrwerk oder zum Verankern eines Sitzelementes auf einer Kindersitz-Basis (12).

8. Kindersitz nach einem der vorhergehenden Ansprüche,
**dadurch gekennzeichnet, dass**
Steuereinrichtung (19) und Beschleunigungserfassungseinrichtung, insbesondere Beschleunigungssensor (17), per Kabel (18) oder drahtlos miteinander verbunden sind.

9. Kindersitz nach einem der vorhergehenden Ansprüche,
**dadurch gekennzeichnet, dass**
der Fangkörper (14) per Fahrzeug-Gurtsystem an einem/an dem Hauptkörper des Kindessitzes gehalten wird oder per zusätzlicher, insbesondere in den Kindersitz integrierter, Halteeinrichtung, wie z.B. mittels eines/des Fixierungsgurtes gehalten wird, wobei ggf. in der zusätzlichen Halteeinrichtung ein Kabel zur Übermittlung von Information, vorzugsweise von der Beschleunigungserfassungseinrichtung, insbesondere Beschleunigungssensor, zu der Steuereinrichtung, vorgesehen ist.

10. Kindersitz nach einem der vorhergehenden Ansprüche,
**dadurch gekennzeichnet, dass**
ein Kraftbegrenzer zur Begrenzung einer durch eine Rückhalteeinrichtung, insbesondere Gurtzeug, auf das Kind ausgeübten Kraft, vorgesehen ist, wobei ein Schwellenwert des Kraftbegrenzers vorzugsweise oberhalb eines/des Schwellenwertes einer/der Zustelleinrichtung, insbesondere eines/des Gurtsystem-Gurtspanners, liegt.

11. Kindersitz nach einem der vorhergehenden Ansprüche,
**gekennzeichnet durch**
einen Seitenaufprallschutz, insbesondere umfassend mindestens ein, vorzugsweise gesondert angeordnetes und/oder verstellbares und/oder seitlich angeordnetes, Seitenaufprallschutzelement.

12. Kraftfahrzeug mit einem Kindersitz nach einem der vorhergehenden Ansprüche.

13. Verfahren zur Aktivierung eines Fangkörpers und/oder eines Gurtsystems eines Kindersitzes zur Anbringung auf einem Kraftfahrzeugsitz, insbesondere nach einem der vorhergehenden Ansprüche 1 bis 11, umfassend einen Sitzbereich (11) und einen Rückenabschnitt (10),
wobei der Fangkörper (14) zugstellt wird und/oder wobei ein Gurtsystem durch einen Gurtsystem-Gurtspanner gespannt wird und/oder wobei eine Kindersitzverankerung zugstellt wird,
wobei eine Beschleunigung des Kindersitzes erfasst wird sowie ein Zustellen des Fangkörpers und/oder ein Spannen mittels des Gurtsystem-Gurtspanners bei einer vorbestimmen Beschleunigung und/oder ein Zustellen der Kindersitzverankerung gegenüber den restlichen Komponenten des Kindersitzes, insbesondere bei einer durch eine in den Kindersitz integrierten Beschleunigungserfassungseinrichtung erfassten Beschleunigung, bewirkt wird.

14. Verfahren nach Anspruch 13 zum Auslösen eines Airbags eines Kindersitzes zur Anbringung auf einem Kraftfahrzeugsitz, insbesondere nach einem der vorhergehenden Ansprüche 1 bis 11, wobei der Fangköper (14) einen integriertem Airbag (15, 15a, 15c) umfasst, wobei eine im Kindersitz integrierte Beschleunigungserfassungseinrichtung eine Beschleunigung des Kindersitzes erfasst und eine Steuereinrichtung (19) ein Auslösen des Airbags (15, 15a-15c) aufgrund einer von der Beschleunigungserfassungseinrichtung erfassten Beschleunigung bewirkt.

15. Verfahren nach Anspruch 13 oder Anspruch 14 zur Aktivierung eines Fangkörpers (14) eines Kindersitzes zur Anbringung auf einem Kraftfahrzeugsitz, insbesondere nach einem der vorhergehenden Ansprüche 1 bis 11, wobei der Fangköper (14) eine integrierte Abstandsvergrößerungseinrichtung umfasst, insbesondere mit integriertem Airbag (15a), einem ersten (20) und einem zweiten (21) Abschnitt, wobei der zweite Abschnitt mit dem ersten Abschnitt verbunden ist, wobei eine Abstandsvergrößerungseinrichtung, insbesondere ein Airbag (15c), so aktiviert wird, dass der zweite Abschnitt in Richtung eines Beckens und/oder der beine eines im Kindersitz sitzenden Kindes, vom ersten Abschnitt weg, verlagert wird,
wobei das Verfahren vorzugsweise weiterhin umfasst: Erfassen einer Beschleunigung des Kindersitzes sowie Auslösen der Abstandsvergrößerungseinrichtung, insbesondere des Airbags, aufgrund der erfassten Beschleunigung.

## Claims

1. Child seat for attachment to a motor vehicle seat, comprising
- a seat area (11),
- a back section (10),
- an impact shield (14) as well as an impact shield infeed unit for infeeding the impact shield and/or
a belt system and a belt system belt tensioner, wherein the belt system can be tensioned by the belt system belt tensioner and/or
a child seat anchor having a child seat anchor infeed unit, and
- an acceleration detection unit for detecting an acceleration of the child seat and a control unit (19), which is configured such that
an infeed by means of the impact shield infeed unit,
and/or
a tensioning by means of the belt system belt tensioner,
and/or an infeed of the child seat anchor in relation to the remaining components of the child seat
is caused due to a predetermined acceleration, in particular due to an acceleration detected by an acceleration detection unit integrated in the child seat.

2. Child seat as claimed in claim 1, wherein the impact shield (14) comprises an integrated airbag (15, 15a, 15c) and/or wherein an airbag (15b) is provided in the seat area, wherein the control unit (19) is configured such that triggering of the airbag (15, 15a-15c) is caused due to an acceleration detected by the acceleration detection unit.

3. Child seat as claimed in claim 1 or 2, wherein the impact shield (14) comprises an integrated distance increasing unit, in particular having integrated airbag (15a), a first (20) and a second (21) section, wherein the second section is connected to the first section and is arranged such that, in case of an activation of the distance increasing unit, in particular the airbag (15c), it is displaced in the direction of a pelvis and/or the legs of a child seated in the child seat, away from the first section, wherein the impact shield is preferably designed to be held or fastened in the area of the first section on the child seat,
wherein the control unit (19) is configured such that triggering of the distance increasing unit, in particular the airbag (15c), is caused due to an acceleration detected by the acceleration detection unit.

4. Child seat as claimed in any one of the preceding claims,
**characterized in that**
the acceleration detection unit comprises an acceleration sensor (17).

5. Child seat as claimed in any one of the preceding claims,
**characterized in that**
the control unit (19) accordingly actuates or activates if an acceleration threshold value of at least 2 g, preferably at least 4 g, more preferably at least 6 g and/or of at most 25 g, preferably 20 g, more preferably 15 g is exceeded.

6. Child seat as claimed in any one of the preceding claims,
**characterized in that**
the airbag (15a) is displaced in case of its activation downward and/or to the rear, in particular in the direction of the hips and/or the legs of a child seated in the child seat.

7. Child seat as claimed in any one of the preceding claims,
**characterized in that**
the acceleration detection unit, in particular the acceleration sensor (17), is arranged on a section of the child seat which, in the installed state of the child seat, is arranged in the vicinity of the vehicle or the vehicle body, preferably in an anchoring unit (16), in particular for anchoring the child seat on the vehicle or chassis or for anchoring a seat element on a child seat base (12).

8. Child seat as claimed in any one of the preceding claims,
**characterized in that**
control unit (19) and acceleration detection unit, in particular acceleration sensor (17) are connected to one another via cable (18) or wirelessly.

9. Child seat as claimed in any one of the preceding claims,
**characterized in that**
the impact shield (14) is held via the vehicle belt system on a/on the main body of the child seat or is held via additional holding unit, in particular integrated in the child seat, for example, by means of a/the fixing belt, wherein a cable for transmitting information, preferably from the acceleration detection unit, in particular the acceleration sensor, to the control unit, is possibly provided in the additional holding unit.

10. Child seat as claimed in any one of the preceding claims,
**characterized in that**
a force limiter is provided for limiting a force exerted by a restraint unit, in particular a belt mechanism, on the child, wherein a threshold value of the force limiter is preferably above a/the threshold value of a/the infeed unit, in particular a/the belt system belt tensioner.

11. Child seat as claimed in any one of the preceding claims,
**characterized in that**
a lateral impact protector, in particular comprising at least one, preferably separately arranged and/or adjustable and/or laterally arranged, lateral impact protection element.

12. Motor vehicle having a child seat as claimed in any one of the preceding claims.

13. Method for activating an impact shield and/or a belt system of a child seat for attachment to a motor vehicle seat, in particular as claimed in any one of preceding claims 1 to 11, comprising a seat area (11) and a back section (10),
wherein the impact shield (14) is infed and/or wherein a belt system is tensioned by a belt system belt tensioner and/or wherein a child seat anchor is infed,
wherein an acceleration of the child seat is detected and an infeed of the impact shield and/or a tensioning by means of the belt system belt tensioner is caused in the event of a predetermined acceleration and/or an infeed of the child seat anchor in relation to the remaining components of the child seat, in particular in the event of an acceleration detected by an acceleration detection unit integrated in the child seat.

14. Method as claimed in claim 13 for triggering an airbag of a child seat for attachment to a motor vehicle seat, in particular as claimed in any one of preceding claims 1 to 11, wherein the impact shield (14) comprises an integrated airbag (15, 15a, 15c), wherein an acceleration detection unit integrated in the child seat detects an acceleration of the child seat and a control unit (19) causes triggering of the airbag (15, 15a-15c) due to an acceleration detected by the acceleration detection unit.

15. Method as claimed in claim 13 or claim 14 for activating an impact shield (14) of a child seat for attachment to a motor vehicle seat, in particular as claimed in any one of preceding claims 1 to 11, wherein the impact shield (14) comprises an integrated distance increasing unit, in particular having integrated airbag (15a), a first (20) and a second (21) section, wherein the second section is connected to the first section, wherein a distance increasing unit, in particular an airbag (15c), is activated so that the second section is displaced in the direction of a pelvis and/or the legs of a child seated in the child seat, away from the first section,
wherein the method preferably furthermore comprises: detecting an acceleration of the child seat and triggering the distance increasing unit, in particular the airbag, due to the detected acceleration.

## Revendications

1. Siège enfant à installer sur un siège de véhicule automobile, comprenant
- une zone d'assise (11),
- une partie de dossier (10),
- un bouclier d'impact (14) et un dispositif de mise en place du bouclier d'impact pour la mise en place du bouclier d'impact et/ou
un système de ceintures et un tendeur de ceintures du système de ceintures, le système de ceintures pouvant être tendu par le tendeur de ceintures du système de ceintures et/ou un ancrage de siège enfant avec un dispositif de mise en place de l'ancrage de siège enfant, et
- une installation de détection de l'accélération destinée à détecter une accélération du siège enfant, ainsi qu'une installation de commande (19) configurée de telle manière que une mise en place au moyen du dispositif de mise en place du bouclier d'impact et/ou
une tension au moyen du tendeur de ceintures du système de ceintures
et/ou une mise en place de l'ancrage de siège enfant vis-à-vis des composants restants du siège enfant
soient réalisées en raison d'une accélération prédéterminée, en particulier en raison d'une accélération détectée par une installation de détection de l'accélération intégrée dans le siège enfant.

2. Siège enfant selon la revendication 1, dans lequel le bouclier d'impact (14) comprend un coussin gonflable de protection intégré (15, 15a, 15c) et/ou dans lequel un coussin gonflable de protection (15b) est prévu dans la zone d'assise, l'installation de commande (19) étant configurée de telle sorte que le coussin gonflable de protection (15, 15a-15c) soit déclenché en raison d'une accélération détectée par l'installation de détection de l'accélération.

3. Siège enfant selon la revendication 1 ou 2, dans lequel le bouclier d'impact (14) comprend une installation d'accroissement de la distance intégrée, en particulier avec un coussin gonflable de protection intégré (15a), une première partie (20) et une deuxième partie (21), la deuxième partie étant reliée à la première et disposée de façon à se déplacer, en cas d'activation de l'installation d'accroissement de la distance, en particulier du coussin gonflable de protection (15c), vers le bassin et/ou les jambes d'un enfant assis dans le siège enfant en s'éloignant de la première partie, le bouclier d'impact étant de préférence conçu pour être retenu ou fixé sur le siège enfant au niveau de la première partie,
l'installation de commande (19) étant configurée de telle manière que l'installation d'accroissement de la distance, en particulier le coussin gonflable de protection (15c), soit déclenchée en raison d'une accélération détectée par l'installation de détection de l'accélération.

4. Siège enfant selon l'une des revendications précédentes, **caractérisé en ce que** l'installation de détection de l'accélération comprend un capteur d'accélération (17).

5. Siège enfant selon l'une des revendications précédentes, **caractérisé en ce que** l'installation de commande (19) actionne ou active lorsqu'un seuil d'accélération d'au moins 2 G, de préférence d'au moins 4 G, encore plus de préférence d'au moins 6 G et/ou au maximum de 25 G, de préférence 20 G, encore plus de préférence 15 G.

6. Siège enfant selon l'une des revendications précédentes, **caractérisé en ce que** le coussin gonflable de protection (15a), lorsqu'il est activé, est refoulé vers le bas et/ou l'arrière, en particulier vers la hanche et/ou les jambes d'un enfant assis dans le siège enfant.

7. Siège enfant selon l'une des revendications précédentes, **caractérisé en ce que** l'installation de détection de l'accélération, en particulier le capteur d'accélération (17), est disposé sur une partie du siège enfant qui est disposée, dans l'état installé du siège enfant, à proximité du véhicule ou de la carrosserie, de préférence dans une installation d'ancrage (16), en particulier pour l'ancrage du siège enfant sur le véhicule ou le châssis ou pour l'ancrage d'un élément de siège sur un socle de siège enfant (12).

8. Siège enfant selon l'une des revendications précédentes, **caractérisé en ce que** l'installation de commande (19) et l'installation de détection de l'accélération, en particulier le capteur d'accélération (17), sont connectées l'une à l'autre par câble (18) ou sans fil.

9. Siège enfant selon l'une des revendications précédentes, **caractérisé en ce que** le bouclier d'impact (14) est retenu par le système de ceintures du véhicule sur un/le corps principal du siège enfant ou par une installation de maintien supplémentaire, en particulier intégrée dans le siège enfant, par exemple au moyen d'une/de la sangle de fixation, l'installation de maintien supplémentaire contenant éventuellement un câble pour la transmission d'informations, de préférence de l'installation de détection de l'accélération, en particulier du capteur d'accélération, à l'installation de commande.

10. Siège enfant selon l'une des revendications précédentes, **caractérisé en ce qu'**un limiteur de force est prévu pour limiter une force exercée sur l'enfant par une installation de retenue, en particulier par des ceintures, une valeur de seuil du limiteur de force se situant de préférence au-dessus d'une/de la valeur de seuil d'une/de l'installation de mise en place, en particulier d'un/du tendeur de ceintures du système de ceintures.

11. Siège enfant selon l'une des revendications précédentes, **caractérisé en ce qu'**il comporte une protection contre les impacts latéraux, comprenant en particulier au moins un élément de protection latérale contre les impacts, de préférence séparé et/ou réglable et/ou disposé sur le côté.

12. Véhicule automobile équipé d'un siège enfant selon l'une des revendications précédentes.

13. Procédé d'activation d'un bouclier d'impact et/ou d'un système de ceintures d'un siège enfant à installer sur un siège de véhicule automobile, en particulier selon l'une des revendications 1 à 11, comprenant une zone d'assise (11) et une partie de dossier (10), dans lequel le bouclier d'impact (14) est mis en place et/ou dans lequel un système de ceintures est tendu par un tendeur de ceintures du système de ceintures et/ou dans lequel un ancrage de siège enfant est mis en place, dans lequel une accélération du siège enfant est détectée et une mise en place du bouclier d'impact et/ou une tension du tendeur de ceintures du système de ceintures à une accélération prédéterminée et/ou une mise en place de l'ancrage de siège enfant vis-à-vis du reste des composants du siège enfant sont réalisées, en particulier à une accélération détectée par une installation de détection de l'accélération intégrée dans le siège enfant.

14. Procédé selon la revendication 13 pour le déclenchement d'un coussin gonflable de protection d'un siège enfant à installer sur un siège de véhicule automobile, en particulier selon l'une des revendications 1 à 11, dans lequel le bouclier d'impact (14) comprend un coussin gonflable de protection intégré (15, 15a, 15c), dans lequel une installation de détection de l'accélération intégrée dans le siège enfant détecte une accélération du siège enfant et une installation de commande (19) déclenche le coussin gonflable de protection (15, 15a-15c) en raison d'une accélération détectée par l'installation de détection de l'accélération.

15. Procédé selon la revendication 13 ou 14 pour l'activation d'un bouclier d'impact (14) d'un coussin gonflable de protection d'un siège enfant à installer sur un siège de véhicule automobile, en particulier selon l'une des revendications 1 à 11, dans lequel le bouclier d'impact (14) comprend une installation d'accroissement de la distance intégrée, en particulier avec un coussin gonflable de protection intégré (15a), avec une première partie (20) et une deuxième partie (21), la deuxième partie étant reliée à la première partie, une installation d'accroissement de la distance, en particulier un coussin gonflable de protection (15c), étant activée de telle manière que la deuxième partie soit déplacée vers le bassin et/ou les jambes d'un enfant assis dans le siège enfant en s'éloignant de la première partie,
lequel procédé comprend de préférence, en outre, la détection d'une accélération du siège enfant et le déclenchement de l'installation d'accroissement de la distance, en particulier du coussin gonflable de protection, en raison de l'accélération détectée.
